(19) **Europäisches Patentamt / European Patent Office / Office européen des brevets**

(11) **EP 4 552 497 A1**

(12) **EUROPEAN PATENT APPLICATION**
published in accordance with Art. 153(4) EPC

(43) Date of publication:
**14.05.2025 Bulletin 2025/20**

(21) Application number: **23835263.7**

(22) Date of filing: **16.06.2023**

(51) International Patent Classification (IPC):
*A01N 37/38* (2006.01)   *A01N 51/00* (2006.01)
*A01P 7/04* (2006.01)   *A01P 3/00* (2006.01)
*A01N 43/56* (2006.01)   *A01N 43/78* (2006.01)
*A01N 43/80* (2006.01)   *A01N 25/10* (2006.01)
*A01N 47/02* (2006.01)   *A01C 1/08* (2006.01)

(52) Cooperative Patent Classification (CPC):
A01C 1/08; A01N 25/10; A01N 37/38; A01N 43/56;
A01N 43/78; A01N 43/80; A01N 47/02;
A01N 51/00; A01P 3/00; A01P 7/04

(86) International application number:
**PCT/JP2023/022386**

(87) International publication number:
**WO 2024/009729 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.07.2022 JP 2022109095**

(71) Applicant: **Sumitomo Chemical Company, Limited
Tokyo 103-6020 (JP)**

(72) Inventors:
- **IKEUCHI, Nao
  Takarazuka-shi, Hyogo 665-8555 (JP)**
- **TERADA, Takatoshi
  Takarazuka-shi, Hyogo 665-8555 (JP)**
- **MIZOGUCHI, Nanako
  Tokyo, 103-6020 (JP)**

(74) Representative: **Cabinet Beau de Loménie
158, rue de l'Université
75340 Paris Cedex 07 (FR)**

(54) **AQUEOUS PESTICIDE COMPOSITION CONTAINING NATURAL RUBBER**

(57)    An object of the present invention is to provide an aqueous agrochemical composition containing a natural rubber, which has an excellent agrochemical activity effect. The present invention relates to an aqueous agrochemical composition including an agrochemical active ingredient, a surfactant, a natural rubber, and water, in which a weight ratio of the agrochemical active ingredient to the natural rubber is 100 : 1 to 1 : 2.

**EP 4 552 497 A1**

**Description**

TECHNICAL FIELD

The present invention relates to an agrochemical composition. More specifically, the present invention relates to an aqueous agrochemical composition containing a natural rubber, and further relates to an aqueous agrochemical composition for seed treatment.

BACKGROUND ART

In recent years, environmental problems caused by microplastics have occurred, and efforts for achieving a Sustainable Development Goals (SDGs) (commonly called Global Goals) have been required. Among them, development of an environmentally friendly agrochemical formulation (agrochemical composition) using natural materials has been required.

The agrochemical formulation may contain a binder as a material, and various binders have been reported so far (see, for example, Patent Document 1).

Among them, for example, in an aqueous agrochemical composition for seed treatment, there is a problem that the aqueous agrochemical composition used for the seed treatment or the like is peeled off from the seed at the time of seeding depend on a binder to be used, therefore the handleability is poor, and the agrochemical activity effect cannot be sufficiently exhibited, so it has been required to improve the peelability (Dustiness). In addition, there is a problem that an agrochemical active ingredient flows out due to contact with water such as rainfall or watering, and the agrochemical active effect cannot be sufficiently exhibited, so it has been required to improve water resistance.

Thus, an environmentally friendly agrochemical composition using a natural material, which has improved the peelability from a seed and improved water resistance has been required.

PRIOR ART DOCUMENT

PATENT DOCUMENT

Patent Document 1: JP 2012-184209 A

SUMMARY OF THE INVENTION

PROBLEMS TO BE SOLVED BY THE INVENTION

An object of the present invention is to provide an environmentally friendly aqueous agrochemical composition suitable for social problems, which has improved the peelability from a seed and improved water resistance, and has excellent handleability and excellent agrochemical activity effect.

MEANS FOR SOLVING THE PROBLEMS

As a result of studies, the present inventors have found that the above problems can be solved by containing a certain amount of natural rubber as a binder, and have completed the present invention.

That is, the present invention is as follows.

[1] An aqueous agrochemical composition (hereinafter may be referred to as "the aqueous agrochemical composition of the present invention" or "the composition of the present invention") containing an agrochemical active ingredient, a surfactant, a natural rubber, and water, in which a weight ratio of the agrochemical active ingredient to the natural rubber is 100 : 1 to 1 : 2.

[2] The aqueous agrochemical composition according to [1], in which the agrochemical active ingredient is an agrochemical active ingredient which is solid at 25°C.

[3] The aqueous agrochemical composition according to [1] or [2], in which the agrochemical active ingredient is an agrochemical active ingredient having a melting point of 80°C or higher.

[4] The aqueous agrochemical composition according to any one of [1] to [3], in which the agrochemical active ingredient is at least one selected from the group consisting of clothianidin, inpyrfluxam, oxazosulfyl, mandestrobin, and ethaboxam.

[5] The aqueous agrochemical composition according to any one of [1] to [4], in which the weight ratio of the agrochemical active ingredient to the natural rubber is 100 : 1 to 5 : 2.

[6] The aqueous agrochemical composition according to any one of [1] to [5], containing 10 to 60% by weight of the agrochemical active ingredient and 0.3 to 30% by weight of the natural rubber, based on a weight of the aqueous agrochemical composition.

[7] The aqueous agrochemical composition according to any one of [1] to [6], in which the aqueous agrochemical composition is an aqueous suspension agrochemical composition.

[8] The aqueous agrochemical composition according to any one of [1] to [7], in which the aqueous agrochemical composition is for seed treatment.

[9] A method for controlling pests including applying the aqueous agrochemical composition according to any one of [1] to [8] to a seed of a plant.

[10] A method of producing the aqueous agrochemical composition according to any one of [1] to [8], including a step of adding natural rubber to a dispersion containing an agrochemical active ingredient, a surfactant, and water, in which the agrochemical active ingredient is emulsified or suspended.

[11] A seed (hereinafter may be referred to as "treated seed of the present invention") obtained by applying the aqueous agrochemical composition according to any one of [1] to [8], on which an agrochemical active ingredient, a surfactant, and a natural rubber are retained.

[12] A method of producing a seed on which an agrochemical active ingredient, a surfactant, and a natural rubber are retained, including a step of applying the aqueous agrochemical composition according to any one of [1] to [8] to a seed.

[13] Use of a natural rubber for production of the aqueous agrochemical composition according to any one of [1] to [8], for pest control.

[14] Use of the aqueous agrochemical composition according to any one of [1] to [8], for pest control.

EFFECT OF THE INVENTION

Since the composition of the present invention uses a natural rubber which is a natural material, it can be expected to contribute to solving social problems as an environmentally friendly composition. Further, since the composition of the present invention is suppressed from peeling off from the seed, the handleability is improved. Furthermore, in the composition of the present invention, the agrochemical active ingredient hardly flows out from the seed due to rainfall or watering during germination after application to the seed or after spraying of the seed, and the composition has rainfastness; therefore, the agrochemical activity effect can be sufficiently exhibited without being greatly affected by rainfall or watering.

MODE FOR CARRYING OUT THE INVENTION

Examples of an "agrochemical active ingredient" used in the present invention include active ingredients used in the control of insect pests and the like, the control of plant diseases, the weeding of weeds and the like, and the control for plant growth, in the cultivation of crops and the like. The composition of the present invention contains one or more agrochemical active ingredients.

Examples of the agrochemical active ingredient include insecticidal active ingredients, miticidal active ingredients, nematicidal active ingredients, fungicidal active ingredients, herbicidal active ingredients, and plant growth regulator active ingredients. In particular, insecticidal active ingredients, miticidal active ingredients, nematicidal active ingredients, fungicidal active ingredients, and plant growth regulator active ingredients are preferred.

As the agrochemical active ingredient of the present invention, an agrochemical active ingredient which is solid at 25°C is suitably used from the viewpoint of the handleability at the time of production.

As the agrochemical active ingredient of the present invention, an agrochemical active ingredient having a melting point of 80°C or higher is more preferably used from the viewpoint of further improving the handleability at the time of production. Examples of the agrochemical active ingredient having a melting point of 80°C or higher include the following.

As the insecticidal active ingredient, the miticidal active ingredient, or the nematicidal active ingredient having a melting point of 80°C or higher, for example, the following ingredients are appropriately selected: deltamethrin, tralomethrin, acrinathrin, propoxur, isoprocarb, thiodicarb, XMC, carbaryl, pirimicarb, carbofuran, acephate, trichlorfon, tetrachlorvinphos, diflubenzuron, chlorfluazuron, lufenuron, hexaflumuron, flufenoxuron, flucycloxuron, cyromazine, diafenthiuron, hexythiazox, novaluron, teflubenzuron, triflumuron, imidacloprid, acetamiprid, clothianidin, nitenpyram, thiamethoxam, dinotefuran, thiacloprid, spinosad, flubendiamide, chlorantraniliprole, cyantraniliprole, tetraniliprole, cyclaniliprole, fipronil, ethiprole, spirotetramat, spiromesifen, spirodiclofen, spiropidion, triflumezopyrim, sulfoxaflor, abamectin, emamectin benzoate, lepimectin, milbemectin, pymetrozine, pyrifluquinazon, clofentezine, hexythiazox, etoxazole, chlorfenapyr, cartap, thiocyclam, bensultap, buprofezin, chromafenozide, methoxyfenozide, tebufenozide, amitraz, fluacrypyrim, bifenazate, fenpyroximate, pyridaben, tolfenpyrad, indoxacarb, oxazosulfyl, metaflumizone, cyenopyrafen, pyflubumide, flonicamid, broflanilide, fluxametamide, flupyrimin, flometoquin, benzpyrimoxan, hydramethylnon, sulfluramid, boric acid, beta-cyfluthrin, tioxazafen, afidopyropen, fluazaindolizine, fluopyram, isocycloseram, dimpropyridaz, and cyclobutrifluram.

As the fungicidal active ingredient having a melting point of 80°C or higher, for example, the following ingredients are appropriately selected: inpyrfluxam, fenpyrazamine, mandestrobin, benomyl, carbendazim, thiabendazole, thiophanate methyl, diethofencarb, procymidone, iprodione, vinclozolin, diniconazole, epoxiconazole, tebuconazole, difenoconazole, cyproconazole, triadimefon, furametpyr, mepronil, flutolanil, thifluzamide, fosetyl aluminium, pyrimethanil, mepanipyrim, fludioxonil, fenpiclonil, blasticidin S, kasugamycin, polyoxin, validamycin, azoxystrobin, kresoxim-methyl, metominostrobin, chlorothalonil, mancozeb, captan, forpet, tricyclazole, pyroquilon, probenazole, fthalide, cymoxanil, dimethomorph, famoxadone, oxolinic acid, fluazinam, ferimzone, diclocymet, orysastrobin, isotianil, thiazinyl, thiuram, fluoxastrobin, fenamidone, pyribencarb, fenbuconazole, hexaconazole, imibenconazole, ipconazole, metconazole, simeconazole, hydroxyisoxazole, pencycuron, fluopicolide, pyriofenone, isofetamid, fluopyram, thifluzamide, fluxapyroxad, isopyrazam, penflufen, penthiopyrad, boscalid, pyraziflumid, cyazofamid, amisulbrom, ametoctradin, mepanipyrim, oxathiapiprolin, tripholine, fenarimol, oxpoconazole fumarate, fenhexamid, pyributicarb, benthiavalicarb isopropyl, mandipropamid, tolprocarb, acibenzolar-S-methyl, fosetyl aluminum, flusulfamide, flutianil, dichlobentiazox, tebufloquin, picarbutrazox, ziram, iminoctadine albesilate, iminoctadine acetate, dithianon, fluoroimide, benzovindiflupyr, prothioconazole, carboxin, pydiflumetofen, flutriafol, triticonazole, fluquinconazole, metyltetraprole, fenpicoxamid, sedaxane, isoflucypram, silthiofam, bixafen, dimoxystrobin, pyridachlometyl, ipflufenoquin, bromuconazole, triadimenol, florylpicoxamid, fluoxapiprolin, ethaboxam, quinofumelin, aminopyrifen, mefentrifluconazole, flufenoxadiazam, and fluoxytioconazole.

As the plant growth regulator active ingredient having a melting point of 80°C or higher, for example, the following ingredients are appropriately selected: maleic hydrazide, chlormecoat chloride, gibberellic acid, mepiquat chloride, thidiazuron, inabenfide, paclobutrazol, AVG, uniconazole-P, and prohexadione calcium.

The agrochemical active ingredient of the present invention is preferably at least one compound selected from the group consisting of clothianidin, inpyrfluxam, oxazosulfyl, mandestrobin, and ethaboxam.

The composition of the present invention contains the agrochemical active ingredient in a total amount of preferably 10 to 60% by weight, more preferably 15.0 to 50.0% by weight, based on the weight of the composition of the present invention.

Here, unless otherwise specified, the numerical value of % by weight is calculated per weight of the composition of the present invention.

The composition of the present invention contains one or more natural rubbers as an adjuvant that acts as a binder. By using the natural rubber, an environmentally friendly formulation can be obtained.

The natural rubber means a substance containing cis-1,4-polyisoprene using sap of a rubber tree as a raw material. Here, as a definition of general natural rubber, in a broad sense, in addition to a natural product-derived unmodified product, a modified product obtained by graft modification with an acrylic monomer or the like and having a modified chemical structure may be included. However, in the present invention, from the viewpoint of providing an environmentally friendly agrochemical composition, the natural rubber defined in the present specification does not include these chemically structurally modified products.

On the other hand, a substance obtained by simply adding a stabilizer (for example, ammonia) such as a coagulation inhibitor to the sap of the rubber tree may be included in the natural rubber of the present invention. A product derived from natural rubber latex (rubber content in natural rubber latex) may be used. The natural rubber latex is not particularly limited, and examples thereof include field latex (raw latex obtained by tapping a rubber tree), high ammonia latex (high ammonia natural rubber latex), low ammonia latex (low ammonia natural rubber latex), centrifugally concentrated latex, and deproteinized latex obtained by treating natural rubber latex with a surfactant, an enzyme, and the like. Examples of such natural rubber latex include one kind or a combination of two or more kinds selected from these latex. Such natural rubber latex can be obtained as a commercially available product, and specific examples thereof include SeLatex (registered trademark) 6111 (manufactured by Sumitomo Rubber Industries, Ltd.), SeLatex (registered trademark) 1101 (manufactured by Sumitomo Rubber Industries, Ltd.), ULACOL (registered trademark) (manufactured by Regitex Corporation), LA-LATEX (manufactured by Regitex Corporation), HA-LATEX (manufactured by Regitex Corporation), and UNIMAC LATEX (manufactured by Unimac Rubber Co., Ltd.), but are not limited thereto.

The composition of the present invention is an aqueous composition, and the natural rubber is present in a state of being dispersed in water.

By using the natural rubber as a binder, the composition of the present invention can improve the peelability from a seed and water resistance as compared with the case of using synthetic products or other natural materials. By improving the peelability, the handleability at the time of seeding is improved, and peeling of the agrochemical active ingredient can be suppressed, so that the agrochemical activity effect can be sufficiently exhibited. By improving the water resistance, the agrochemical active ingredient does not flow out by contact with water, and the agrochemical activity effect can be sufficiently exhibited.

**EP 4 552 497 A1**

The weight ratio of the agrochemical active ingredient to the natural rubber is 100 : 1 to 1 : 2, preferably 100 : 1 to 1 : 1, more preferably 100 : 1 to 2 : 1, still more preferably 100 : 1 to 5 : 2, and most preferably 50 : 1 to 5 : 2.

The composition of the present invention contains the natural rubber in an amount of preferably 0.3 to 30% by weight, more preferably 0.3 to 15.0% by weight, based on the weight of the composition of the present invention.

The composition of the present invention contains one or more surfactants. Examples of the surfactant used in the present invention include an anionic surfactant, a nonionic surfactant, a cationic surfactant, and an amphoteric surfactant.

Examples of the anionic surfactant include sulfonate, sulfuric acid ester salt, phosphoric acid ester salt, carboxylate, and a mixture thereof.

Examples of the sulfonate include naphthalene sulfonate and formaldehyde condensate thereof, alkylbenzene sulfonate, alkylnaphthalene sulfonate, alkyldiphenyl ether disulfonate, $\alpha$-olefin sulfonate, lignin sulfonate, polyoxyethylene alkylphenyl ether sulfonate, and dialkyl sulfosuccinate.

Examples of the sulfuric acid ester salt include alkyl sulfuric acid ester salt, polyoxyethylene alkyl ether sulfuric acid ester salt, and polyoxyethylene alkyl phenyl ether sulfuric acid ester salt.

Examples of the phosphoric acid ester salt include polyoxyethylene alkylaryl ether phosphoric acid ester salt and polyoxyethylene tristyrylphenyl ether phosphoric acid ester salt.

Examples of the carboxylate include fatty acid salt and polycarboxylate.

Examples of the nonionic surfactant include polyoxyethylene alkyl ether, polyoxypropylene alkyl ether, polyoxyethylene polyoxypropylene alkyl ether, polyoxyethylene distyrylphenyl ether, polyoxyethylene tristyrylphenyl ether, sucrose fatty acid ester, sorbitan fatty acid ester, polyoxyethylene sorbitan fatty acid ester, glycerin fatty acid ester, polyoxyethylene fatty acid ester, polyoxyethylene alkylamine, alkylalkanolamide, polyoxyethylene polyoxypropylene block copolymer, alkyl polyglucoside, and acrylic copolymer.

Examples of the cationic surfactant include alkylamine salt and quaternary ammonium salt.

Examples of the amphoteric surfactant include alkyl betaine.

The weight ratio of the agrochemical active ingredient to the total amount of the surfactant is preferably 1000 : 1 to 5 : 3, and more preferably 10 : 1 to 5 : 3. The composition of the present invention contains a surfactant in a total amount of preferably 0.1 to 10% by weight, more preferably 2 to 10% by weight, based on the weight of the composition of the present invention.

The composition of the present invention contains water.

Water used in the composition of the present invention is not particularly limited, and examples thereof include water used in normal aqueous agrochemical compositions such as tap water, well water, and ion-exchanged water.

The composition of the present invention contains water in an amount of preferably 20 to 80% by weight, more preferably 20 to 65% by weight, based on the weight of the composition of the present invention.

The composition of the present invention may further contain one or more formulation auxiliaries used in a normal aqueous agrochemical composition. Examples of the formulation auxiliaries include thickeners, defoamers, preservatives, antifreezing agents, and coloring agents.

Examples of the thickener include natural polysaccharides such as xanthan gum, rhamsan gum, locust bean gum, guar gum, carrageenan, welan gum, alginic acid, alginate, and gum tragacanth; mineral substance powder such as magnesium aluminum silicate, magnesium aluminum silicate, smectite, bentonite, hectorite, synthetic hydrated silicic acid, and dry silica; and alumina sol. These thickeners can be used alone or in combination of two or more.

When the composition of the present invention contains the thickener, the total content thereof is preferably 0.1 to 5% by weight, more preferably 0.1 to 1.0% by weight, based on the weight of the composition of the present invention.

Examples of the defoamer include silicone-based defoamer. Two or more kinds of defoamers may be used.

When the composition of the present invention contains the defoamer, the total content thereof is preferably 0.01 to 3% by weight, based on the weight of the composition of the present invention.

Examples of the preservative include p-hydroxybenzoic acid esters, salicylic acid derivatives, and isothiazolinone-based preservatives. These preservatives can be used alone or in combination of two or more.

When the composition of the present invention contains the preservative, the total content thereof is preferably 0.005 to 1% by weight, based on the weight of the composition of the present invention.

Examples of the antifreezing agent include ethylene glycol, propylene glycol, urea, and glycerin. These antifreezing agents can be used alone or in combination of two or more.

When the composition of the present invention contains the antifreezing agent, the total content thereof is preferably 1 to 20% by weight, based on the weight of the composition of the present invention.

Examples of the coloring agent include pigments such as iron oxide, titanium oxide, Prussian blue, and azo pigments, and dyes such as alizarin dyes, azo dyes, and metal phthalocyanine dyes. These coloring agents can be used alone or in combination of two or more.

When the composition of the present invention contains the coloring agent, the total content thereof is preferably 1.0 to 10.0% by weight, based on the weight of the composition of the present invention.

Examples of the form of the aqueous agrochemical composition of the present invention include an aqueous suspension composition (also called aqueous suspension concentrate or SC) in which particles of a solid agrochemical active ingredient are suspended in water, an oil-in-water emulsion composition (also called emulsion oil in water or EW) in which the agrochemical active ingredient insoluble in water is emulsified and dispersed as fine particles in water by addition of an emulsifier, and an aqueous emulsion suspension composition (also called suspoemulsion or SE) in which oil droplets as a liquid agrochemical ingredient and particles of a solid agrochemical ingredient are both dispersed in water, and the aqueous suspension composition is preferable.

The composition of the present invention can be produced using an agrochemical active ingredient, a natural rubber, a surfactant, water, and if necessary, formulation auxiliaries such as a thickener, a defoamer, a preservative, an antifreezing agent, and a coloring agent, and the production method thereof is not particularly limited.

Examples of the method of producing the composition of the present invention include a production method including a step of adding a natural rubber to a dispersion containing an agrochemical active ingredient, a surfactant, and water, in which the agrochemical active ingredient is emulsified or suspended.

More specific examples thereof include a production method including

a step (first step) of producing a dispersion containing an agrochemical active ingredient, a surfactant, and water, in which the agrochemical active ingredient is emulsified or suspended, and
a step (second step) of uniformly dispersing a natural rubber in the dispersion.

Examples of the first step include a step of adding an agrochemical active ingredient, a surfactant, and if necessary, a formulation auxiliary such as a defoamer, a thickener, or an antifreezing agent to water, followed by dispersing the obtained mixture with a disperser mill or the like, and finely pulverizing and dispersing the agrochemical active ingredient with a wet mill such as a bead mill so that the average particle size of the agrochemical active ingredient is 10 $\mu$m or less, preferably 5 $\mu$m or less. In the present invention, the particle size means a volume median diameter. The volume median diameter refers to the particle size at which a cumulative frequency in the volume-based frequency distribution is to be 50%, and the volume median diameter can be determined by a wet measurement using a laser diffraction particle size analyzer. More specifically, an object to be measured is dispersed in water followed by measuring with the device. As the laser diffraction particle size analyzer, Mastersizer 3000 manufactured by Malvern Instruments Ltd. can be used.

Examples of the second step include a step of adding a natural rubber, and if necessary, a formulation auxiliary such as a thickener, a preservative, or a coloring agent to the dispersion obtained in the first step, and uniformly mixing them. In the second step, latex containing a natural rubber may be used instead of the natural rubber itself.

Hereinafter, an example of a method of producing the composition of the present invention will be described.

(First step)

First, an agrochemical active ingredient, a surfactant, and a formulation auxiliary are added to water to obtain a mixture. Examples of the formulation auxiliaries include defoamers, thickeners, and antifreezing agents.

Next, the obtained mixture is finely pulverized using a commercially available wet mill such as a bead mill to obtain a suspension in which the agrochemical active ingredient is suspended. Examples of the wet mill include a horizontal bead mill (DYNO-MILL KDL) manufactured by WILLY A. BACHOFEN AG Maschinenfabrik.

(Second step)

First, a formulation auxiliary is added to water and stirred to obtain a mixture. Examples of the formulation auxiliaries include antifreezing agents, thickeners, and preservatives.

Next, to the suspension obtained in the first step, the mixture and, if necessary, a coloring agent are added, and in addition, a natural rubber or an aqueous dispersion containing the natural rubber and, if necessary, water are added and mixed to obtain the aqueous suspension agrochemical composition of the present invention.

Hereinafter, the term "seed" includes seeds and vegetative reproduction organs. The vegetative reproduction organ means a part of plant such as root, stem, and leaf which has a growth capability when said part is separated from the plant body and placed into soil, which includes, for example of the vegetative reproduction organ include tuberous root, creeping root, bulb, corm or solid bulb, tuber, rhizome, stolon, rhizophore, cane cuttings, propagule, and vine cutting.

The composition of the present invention is mainly used for seed treatment, but is not limited thereto. Examples of seeds capable of applying the composition of the present invention include rice, wheat, corn, wheat, barley, rye, sorghum, and turf; dicotyledonous plant (for example, cotton, sugar beet, peanut, potato, sunflower, soybean, alfalfa, rapeseed); and other vegetable seeds, but are not limited thereto.

The plants described above are not limited specifically, as long as they are generally cultivated cultivars. The plants also include plants that may be produced by natural breeding, plants that may be generated by mutation, F1 hybrid plants, and genetically-modified plants.

By applying the composition of the present invention to a seed, the seed to which the composition of the present invention is attached can be produced. Examples of a method of applying the composition of the present invention to a seed include a spraying treatment in which an undiluted or a dilution of the composition of the present invention is atomized and sprayed onto the surface of the seed, a smearing treatment in which an undiluted or a dilution of the composition of the present invention is applied to the seed, an immersion treatment in which the seed is immersed in an undiluted or a dilution of the composition of the present invention for a certain period of time, and a method of coating the seed with a carrier containing the composition of the present invention (film coating treatment, pellet coating treatment, and the like).

Hereinafter, an example of a method of producing a seed to which the composition of the present invention is attached by smearing treatment will be described.

First, the composition of the present invention and ion-exchanged water are mixed to prepare a dilution.

Next, the dilution or the diluted of the composition of the present invention is applied to the seed and retained. At this time, a commercially available apparatus may be used, and examples thereof include HEGE 11 manufactured by WINTERSTEIGER.

The seed subjected to the smearing treatment is dried on a stainless-steel tray, whereby the seed to which the composition of the present invention is attached can be obtained.

By applying the composition of the present invention to a seed of a plant and using the seed, pests can be controlled.

When an insecticidal active ingredient, a miticidal active ingredient, or a nematicidal active ingredient is contained as the agrochemical active ingredient, examples of the pests include harmful arthropod such as harmful insects and harmful mites, nemathelminth such as nematodes, and harmful mollusk, but are not limited thereto.

When a fungicidal active ingredient is contained as the agrochemical active ingredient, examples of the pests include plant-pathogenic microorganisms such as fungi, Oomycete, Phytomyxea, and bacteria, but are not limited to thereto. Examples of the fungi include Ascomycota, Basidiomycota, Blasocladiomycota, Chytridiomycota, Mucoromycota, and Olpidiomycota.

EXAMPLES

Next, the present invention is described in more detail by using Examples and Comparative Examples; however, the present invention should not be limited to these examples.

Production Example 1

47.8 parts by weight of clothianidin, 6.0 parts by weight of glycerin, 5.0 parts by weight of an acrylic graft copolymer (Terseperse 2500, manufactured by Huntsman International LLC.), 1.0 part by weight of an acrylic copolymer (Envipol 871, manufactured by Lamberti S.p.A.), 1.0 part by weight of an EO-PO block copolymer (Pluronic P103, manufactured by BASF SE), 0.3 parts by weight of a silicone-based defoamer (Xiameter AFE-0010, manufactured by Dow Corning Toray Co., Ltd.), 0.3 parts by weight of magnesium aluminum silicate (Veegum R, manufactured by Vanderbilt Chemicals, LLC), and 20.2 parts by weight of ion-exchanged water were mixed to obtain a mixture (i).

The mixture (i) was wet-pulverized using a horizontal bead mill (DYNO-MILL KDL, manufactured by WILLY A. BACHOFEN AG Maschinenfabrik) to obtain a suspension (i). Separately, 0.05 parts by weight of xanthan gum (Kelzan S plus, manufactured by CP Kelco) and 0.25 parts by weight of a preservative (Proxel GXL, manufactured by Lonza, containing 1,2-benzisothiazoline-3-one as an active ingredient) were added to 4.7 parts by weight of ion-exchanged water, followed by continuring to stir for 2 hours to obtain a mixture (ii). The mixture (ii) and 8.4 parts by weight of a red pigment aqueous dispersion (Agrocer red 112 disp, manufactured by CLARIANT) were added to the suspension (i) obtained previously and were mixed to obtain a mixture (iii). Followed by adding 5.0 parts by weight of an aqueous dispersion containing 60% by weight of unmodified natural rubber (ULACOL (registered trademark), manufactured by Regitex Corporation) thereto, and mixing to obtain the aqueous suspension agrochemical composition of the present invention containing the components shown in Table 1 (hereinafter, also referred to as the composition (1) of the present invention).

The unit of the numerical value of each component shown in the following table is % by weight when the total amount of the aqueous suspension agrochemical composition is 100% by weight.

Production Example 2

The mixture (iii) was obtained by the same procedures as in Production Example 1. Followed by adding 3.0 parts by weight of an aqueous dispersion containing 60% by weight of unmodified natural rubber (ULACOL (registered trademark), manufactured by Regitex Corporation) and 2.0 parts by weight of ion-exchanged water thereto to obtain the aqueous suspension agrochemical composition of the present invention containing the components shown in Table 1 (hereinafter, also referred to as the composition (2) of the present invention).

Production Example 3

The mixture (iii) was obtained by the same procedures as in Production Example 1. Followed by adding 2.0 parts by weight of an aqueous dispersion containing 60% by weight of unmodified natural rubber (ULACOL (registered trademark), manufactured by Regitex Corporation) and 3.0 parts by weight of ion-exchanged water thereto to obtain the aqueous suspension agrochemical composition of the present invention containing the components shown in Table 1 (hereinafter, also referred to as the composition (3) of the present invention).

Production Example 4

The mixture (iii) was obtained by the same procedures as in Production Example 1. Followed by adding 1.0 parts by weight of an aqueous dispersion containing 60% by weight of unmodified natural rubber (ULACOL (registered trademark), manufactured by Regitex Corporation) and 4.0 parts by weight of ion-exchanged water thereto to obtain the aqueous suspension agrochemical composition of the present invention containing the components shown in Table 1 (hereinafter, also referred to as the composition (4) of the present invention).

Production Example 5

30.0 parts by weight of inpyrfluxam, 3.7 parts by weight of a mixture of 40% by weight of polyoxyethylene tristyryl phenyl ether phosphoric acid ester potassium salt and 60% by weight of propylene glycol (SOPROPHOR FLK, manufactured by Solvay Nicca, Ltd.), 0.15 parts by weight of a silicone-based defoamer (Xiameter AFE-1530 Antifoam Emulsion, manufactured by Dow Corning Toray Co., Ltd.), and 27.15 parts by weight of ion-exchanged water were mixed to obtain a mixture (iv).
The mixture (iv) was wet-pulverized using a horizontal bead mill (DYNO-MILL KDL, manufactured by WILLY A. BACHOFEN AG Maschinenfabrik) to obtain a suspension (ii). Separately, 0.15 parts by weight of xanthan gum (Kelzan, manufactured by CP Kelco), 0.3 parts by weight of magnesium aluminum silicate (Veegum R, manufactured by Vanderbilt Chemicals, LLC), 3.7 parts by weight of propylene glycol, and 0.22 parts by weight of a preservative (Proxel GXL, manufactured by Lonza, containing 1,2-benzisothiazoline-3-one as an active ingredient) were added to 14.63 parts by weight of ion-exchanged water, followed by continuring to stir for 2 hours to obtain a mixture (v). The mixture (v) was added to the suspension (ii) obtained previously and was mixed to obtain a mixture (vi). Followed by adding 20.0 parts by weight of an aqueous dispersion containing 60% by weight of unmodified natural rubber (ULACOL (registered trademark), manufactured by Regitex Corporation) thereto to obtain the aqueous suspension agrochemical composition of the present invention containing the components shown in Table 3 (hereinafter, also referred to as the composition (5) of the present invention).

Production Example 6

The mixture (vi) was obtained by the same procedures as in Production Example 5. Followed by adding 15.0 parts by weight of an aqueous dispersion containing 60% by weight of unmodified natural rubber (ULACOL (registered trademark), manufactured by Regitex Corporation) and 5.0 parts by weight of ion-exchanged water thereto to obtain the aqueous suspension agrochemical composition of the present invention containing the components shown in Table 3 (hereinafter, referred to as the composition (6) of the present invention).

Production Example 7

The mixture (vi) was obtained by the same procedures as in Production Example 5. Followed by adding 10.0 parts by weight of an aqueous dispersion containing 60% by weight of unmodified natural rubber (ULACOL (registered trademark), manufactured by Regitex Corporation) and 10.0 parts by weight of ion-exchanged water thereto to obtain the aqueous suspension agrochemical composition of the present invention containing the components shown in Table 3 (hereinafter, referred to as the composition (7) of the present invention).

Production Example 8

The mixture (vi) was obtained by the same procedures as in Production Example 5. Followed by adding 4.0 parts by weight of an aqueous dispersion containing 60% by weight of unmodified natural rubber (ULACOL (registered trademark), manufactured by Regitex Corporation) and 16.0 parts by weight of ion-exchanged water thereto to obtain the aqueous suspension agrochemical composition of the present invention containing the components shown in Table 3 (hereinafter, referred to as the composition (8) of the present invention).

Production Example 9

The mixture (vi) was obtained by the same procedures as in Production Example 5. Followed by adding 2.0 parts by weight of an aqueous dispersion containing 60% by weight of unmodified natural rubber (ULACOL (registered trademark), manufactured by Regitex Corporation) and 18.0 parts by weight of ion-exchanged water thereto to obtain the aqueous suspension agrochemical composition of the present invention containing the components shown in Table 3 (hereinafter, also referred to as the composition (9) of the present invention).

Production Example 10

The mixture (vi) was obtained by the same procedures as in Production Example 5. Followed by adding 1.0 parts by weight of an aqueous dispersion containing 60% by weight of unmodified natural rubber (ULACOL (registered trademark), manufactured by Regitex Corporation) and 19.0 parts by weight of ion-exchanged water thereto to obtain the aqueous suspension agrochemical composition of the present invention containing the components shown in Table 3 (hereinafter, referred to as the composition (10) of the present invention).

Production Example 11

The mixture (vi) was obtained by the same procedures as in Production Example 5. Followed by adding 0.5 parts by weight of an aqueous dispersion containing 60% by weight of unmodified natural rubber (ULACOL (registered trademark), manufactured by Regitex Corporation) and 19.5 parts by weight of ion-exchanged water thereto to obtain the aqueous suspension agrochemical composition of the present invention containing the components shown in Table 3 (hereinafter, also referred to as the composition (11) of the present invention).

Production Example 12

30.0 parts by weight of ethaboxam, 3.7 parts by weight of a mixture of 40% by weight of polyoxyethylene tristyryl phenyl ether phosphoric acid ester potassium salt and 60% by weight of propylene glycol (SOPROPHOR FLK, manufactured by Solvay Nicca, Ltd.), 0.15 parts by weight of a silicone-based defoamer (Xiameter AFE-1530 Antifoam Emulsion, manufactured by Dow Corning Toray Co., Ltd.), and 27.15 parts by weight of ion-exchanged water were mixed to obtain a mixture (vii).
The mixture (vii) was wet-pulverized using a horizontal bead mill (DYNO-MILL KDL, manufactured by WILLY A. BACHOFEN AG Maschinenfabrik) to obtain a suspension (iii). Separately, 0.15 parts by weight of xanthan gum (Kelzan, manufactured by CP Kelco), 0.3 parts by weight of magnesium aluminum silicate (Veegum R, manufactured by Vanderbilt Chemicals, LLC), 3.7 parts by weight of propylene glycol, and 0.22 parts by weight of a preservative (Proxel GXL, manufactured by Lonza, containing 1,2-benzisothiazoline-3-one as an active ingredient) were added to 14.63 parts by weight of ion-exchanged water, followed by continuring to stir for 2 hours to obtain a mixture (viii). The mixture (viii) obtained previously was added to the suspension (iii) and was mixed to obtain a mixture (ix). Followed by adding 4.0 parts by weight of an aqueous dispersion containing 60% by weight of unmodified natural rubber (ULACOL (registered trademark), manufactured by Regitex Corporation) and 16.0 parts by weight of ion-exchanged water thereto to obtain the aqueous suspension agrochemical composition of the present invention containing the components shown in Table 4 (hereinafter, also referred to as the composition (12) of the present invention).

Production Example 13

30.0 parts by weight of mandestrobin, 7.5 parts by weight of a mixture of 40% by weight of polyoxyethylene tristyryl phenyl ether phosphoric acid ester potassium salt and 60% by weight of propylene glycol (SOPROPHOR FLK, manufactured by Solvay Nicca, Ltd.), 0.15 parts by weight of a silicone-based defoamer (KS-538, manufactured by Shin-Etsu Chemical Co., Ltd.), and 31.60 parts by weight of ion-exchanged water were mixed to obtain a mixture (x).
The mixture (x) was wet-pulverized using a horizontal bead mill (DYNO-MILL KDL, manufactured by WILLY A. BACHOFEN AG Maschinenfabrik) to obtain a suspension (iv). Separately, 0.08 parts by weight of xanthan gum (Kelzan S, manufactured by CP Kelco), 0.16 parts by weight of magnesium aluminum silicate (Veegum R, manufactured by Vanderbilt Chemicals, LLC), and 0.15 parts by weight of a preservative (Proxel GXL, manufactured by Lonza, containing 1,2-benzisothiazoline-3-one as an active ingredient) were added to 10.36 parts by weight of ion-exchanged water, followed by continuring to stir for 2 hours to obtain a mixture (xi). The mixture (xi) was added to the suspension (iv) obtained previously and was mixed to obtain a mixture (xii). Followed by adding 4.0 parts by weight of an aqueous dispersion containing 60% by weight of unmodified natural rubber (ULACOL (registered trademark), manufactured by Regitex Corporation) and 16.0 parts by weight of ion-exchanged water thereto to obtain the aqueous suspension agrochemical composition of the present invention containing the components shown in Table 4 (hereinafter, also referred to as the composition (13) of the present invention).

Production Example 14

34.0 parts by weight of oxazosulfyl, 10.0 parts by weight of a mixture of 40% by weight of polyoxyethylene tristyryl phenyl ether phosphoric acid ester potassium salt and 60% by weight of propylene glycol (SOPROPHOR FLK, manufactured by Solvay Nicca, Ltd.), 0.20 parts by weight of a silicone-based defoamer (KS-538, manufactured by Shin-Etsu Chemical Co., Ltd.), and 38.6 parts by weight of ion-exchanged water were mixed to obtain a mixture (xiii).

The mixture (xiii) was wet-pulverized using a horizontal bead mill (DYNO-MILL KDL, manufactured by WILLY A. BACHOFEN AG Maschinenfabrik) to obtain a suspension (v). Separately, 0.10 parts by weight of xanthan gum (Kelzan S PLUS, manufactured by CP Kelco), 0.2 parts by weight of magnesium aluminum silicate (Veegum R, manufactured by Vanderbilt Chemicals, LLC), 2.0 parts by weight of propylene glycol, and 0.20 parts by weight of a preservative (Proxel GXL, manufactured by Lonza, containing 1,2-benzisothiazoline-3-one as an active ingredient) were added to 9.7 parts by weight of ion-exchanged water, followed by continuring to stir for 2 hours to obtain a mixture (xiv). The mixture (xiv) was added to the suspension (v) obtained previously and was mixed to obtain a mixture (xv). Followed by adding 5.0 parts by weight of an aqueous dispersion containing 60% by weight of unmodified natural rubber (ULACOL (registered trademark), manufactured by Regitex Corporation) thereto to obtain the aqueous suspension agrochemical composition of the present invention containing the components shown in Table 4 (hereinafter, also referred to as the composition (14) of the present invention).

Production Example 15

22.6 parts by weight of clothianidin, 5.65 parts by weight of mandestrobin, 3.73 parts by weight of inpyrfluxam, 7.57 parts by weight of ethaboxam, 8.48 parts by weight of sodium lignin sulfonate (Reax 910, manufactured by Ingevity Corp.), 0.34 parts by weight of an EO-PO block copolymer (Synperonic PE/F-127, manufactured by Croda International Plc), 5.65 parts by weight of glycerin, 0.23 parts by weight of a silicone-based defoamer (Xiameter ACP-1500, manufactured by Dow Corning Toray Co., Ltd.), 0.23 parts by weight of magnesium aluminum silicate (Veegum R, manufactured by Vanderbilt Chemicals, LLC), and 20.35 parts by weight of ion-exchanged water were mixed to obtain a mixture (xvi).

The mixture (xvi) was wet-pulverized using a horizontal bead mill (DYNO-MILL KDL, manufactured by WILLY A. BACHOFEN AG Maschinenfabrik) to obtain a suspension (vi). Separately, 0.11 parts by weight of xanthan gum (Kelzan S PLUS, manufactured by CP Kelco) and 0.23 parts by weight of a preservative (Proxel GXL, manufactured by Lonza, containing 1,2-benzisothiazoline-3-one as an active ingredient) were added to 10.66 parts by weight of ion-exchanged water, followed by continuring to stir for 2 hours to obtain a mixture (xvii). The mixture (xvii) and 8.47 parts by weight of a red pigment aqueous dispersion (Agrocer red 112 disp, manufactured by CLARIANT) were added to the suspension (vi) obtained previously and were mixed to obtain a mixture (xviii). Followed by adding 5.7 parts by weight of an aqueous dispersion containing 60% by weight of unmodified natural rubber(ULACOL (registered trademark), manufactured by Regitex Corporation) thereto to obtain the aqueous suspension agrochemical composition of the present invention containing the components shown in Table 4 (hereinafter, referred to as the composition (15) of the present invention).

Comparative Production Example 1

The mixture (iii) was obtained by the same procedures as in Production Example 1. Followed by adding 5.0 parts by weight of ion-exchanged water thereto to obtain an aqueous suspension agrochemical composition for comparison containing the components shown in Table 2 (hereinafter, also referred to as the comparative composition (1)).

Comparative Production Example 2

The mixture (iii) was obtained by the same procedures as in Production Example 1. Followed by adding 0.3 parts by weight of an aqueous dispersion containing 60% by weight of unmodified natural rubber (ULACOL (registered trademark), manufactured by Regitex Corporation) and 4.7 parts by weight of ion-exchanged water thereto to obtain an aqueous suspension agrochemical composition for comparison containing the components shown in Table 2 (hereinafter, also referred to as the comparative composition (2)).

Comparative Production Example 3

The mixture (iii) was obtained by the same procedures as in Production Example 1. Separately, instead of a natural rubber, 0.6 parts by weight of polyvinyl alcohol (EXCEVAL RS2117, manufactured by Kuraray Co., Ltd.) known as a decomposable binder was added to 4.4 parts by weight of ion-exchanged water, and was heated and mixed to obtain a mixture (xix). The mixture (xviii) was added to the mixture (iii) to obtain an aqueous suspension agrochemical composition for comparison containing the components shown in Table 2 (hereinafter, referred to as the comparative composition (3)).

Comparative Production Example 4

The mixture (iii) was obtained by the same procedures as in Production Example 1. Instead of a natural rubber, 5.0 parts by weight of an aqueous solution containing 24% by weight of partially saponified polyvinyl alcohol (Selvol 24 203, manufactured by Sekisui Chemical Co., Ltd.) as a decomposable binder was added thereto to obtain an aqueous suspension agrochemical composition for comparison containing the components shown in Table 2 (hereinafter, referred to as the comparative composition (4)).

Comparative Production Example 5

The mixture (iii) was obtained by the same procedures as in Production Example 1. Instead of a natural rubber, 5.0 parts by weight of an aqueous dispersion containing 24.5 to 25.5% by weight of carnauba wax (Michem Lube 156PFP, manufactured by Michelman) as a binder derived from a natural product was added thereto to obtain an aqueous suspension agrochemical composition for comparison containing the components shown in Table 2 (hereinafter, also referred to as the comparative composition (5)).

Comparative Production Example 6

The mixture (iii) was obtained by the same procedures as in Production Example 1. Instead of a natural rubber, 5.0 parts by weight of an aqueous dispersion containing 54.5 to 56.5% by weight of an ethylene-vinyl acetate copolymer (Dur-O-set E-200 Emulsion, manufactured by Celanese Corporation) as a synthetic resin binder was added thereto to obtain an aqueous suspension agrochemical composition for comparison containing the components shown in Table 2 (hereinafter, also referred to as the comparative composition (6)).

Comparative Production Example 7

The mixture (vi) was obtained by the same procedures as in Production Example 5. Followed by adding 20.0 parts by weight of ion-exchanged water thereto to obtain an aqueous suspension agrochemical composition for comparison containing the components shown in Table 3 (hereinafter, also referred to as the comparative composition (7)).

Comparative Production Example 8

The mixture (ix) was obtained by the same procedures as in Production Example 12. Followed by adding 20.0 parts by weight of ion-exchanged water thereto to obtain an aqueous suspension agrochemical composition for comparison containing the components shown in Table 4 (hereinafter, also referred to as the comparative composition (8)).

Comparative Production Example 9

The mixture (xii) was obtained by the same procedures as in Production Example 13. Followed by adding 20.0 parts by weight of ion-exchanged water thereto to obtain an aqueous suspension agrochemical composition for comparison containing the components shown in Table 4 (hereinafter, also referred to as the comparative composition (9)).

Comparative Production Example 10

The mixture (xv) was obtained by the same procedures as in Production Example 14. Followed by adding 5.0 parts by weight of ion-exchanged water thereto to obtain an aqueous suspension agrochemical composition for comparison containing the components shown in Table 4 (hereinafter, also referred to as the comparative composition (10)).

Comparative Production Example 11

The mixture (xviii) was obtained by the same procedures as in Production Example 15. Followed by adding 5.7 parts by weight of ion-exchanged water thereto to obtain an aqueous suspension agrochemical composition for comparison containing the components shown in Table 4 (hereinafter, also referred to as the comparative composition (11)).

Seed Treatment Example 1

Using a seed treatment apparatus (trade name: HEGE 11, manufactured by WINTERSTEIGER), a treatment liquid prepared by adding 73.8 parts by weight of ion-exchanged water to 26.2 parts by weight of the composition (1) of the present invention was retained on 250 g of corn seeds by a smearing treatment so that the amount of clothianidin retained per one seed was 0.5 mg. The seeds subjected to the smearing treatment were dried on a stainless-steel tray at a temperature of 20°C and a relative humidity of 50% for 2 days or more to obtain a seed treated with the composition (1) of the present invention.
The smearing treatment was performed in the same procedures as in Seed Treatment Example 1 using the compositions (2) to (4) of the present invention to obtain seeds treated with the each of compositions (2) to (4) of the present invention.

Comparative Seed Treatment Example 1

The smearing treatment was performed in the same procedures as in Seed Treatment Example 1 using the comparative compositions (1) to (6) to obtain seeds treated with the each of comparative compositions (1) to (6).

Seed Treatment Example 2

Using a seed treatment apparatus (trade name: HEGE 11, manufactured by WINTERSTEIGER), a treatment liquid prepared by adding 57.0 parts by weight of ion-exchanged water to 43.0 parts by weight of each of the compositions (5) to (11) of the present invention was retained on 250 g of corn seeds by a smearing treatment so that the amount of inpyrfluxam retained per one seed was 0.5 mg. The seeds subjected to the smearing treatment were dried on a stainless-steel tray at a temperature of 20°C and a relative humidity of 50% to obtain seeds treated with each of the compositions (5) to (11) of the present invention.

Comparative Seed Treatment Example 2

The smearing treatment was performed in the same procedures as in Seed Treatment Example 2 using the comparative composition (7) to obtain a seed treated with the comparative composition (7).

Seed Treatment Example 3

Using a seed treatment apparatus (trade name: HEGE 11, manufactured by WINTERSTEIGER), a treatment liquid prepared by adding 62.0 parts by weight of ion-exchanged water to 38.0 parts by weight of the composition (12) of the present invention was retained on 250 g of corn seeds by a smearing treatment so that the amount of ethaboxam retained per one seed was 0.5 mg. The seeds subjected to the smearing treatment were dried on a stainless-steel tray at a temperature of 20°C and a relative humidity of 50% to obtain a seed treated with the composition (12) of the present invention.

Comparative Seed Treatment Example 3

The smearing treatment was performed in the same procedures as in Seed Treatment Example 3 using the comparative composition (8) to obtain a seed treated with the comparative composition (8).

Seed Treatment Example 4

Using a seed treatment apparatus (trade name: HEGE 11, manufactured by WINTERSTEIGER), a treatment liquid prepared by adding 62.0 parts by weight of ion-exchanged water to 38.0 parts by weight of the composition (13) of the present invention was retained on 250 g of corn seeds by a smearing treatment so that the amount of mandestrobin retained per one seed was 0.5 mg. The seeds subjected to the smearing treatment were dried on a stainless-steel tray at a temperature of 20°C and a relative humidity of 50% to obtain a seed treated with the composition (13) of the present invention.

Comparative Seed Treatment Example 4

The smearing treatment was performed in the same procedures as in Seed Treatment Example 4 using the comparative composition (9) to obtain a seed treated with the comparative composition (9).

Seed Treatment Example 5

Using a seed treatment apparatus (trade name: HEGE 11, manufactured by WINTERSTEIGER), a treatment liquid prepared by adding 62.0 parts by weight of ion-exchanged water to 38.0 parts by weight of the composition (14) of the present invention was retained on 250 g of corn seeds by a smearing treatment so that the amount of oxazosulfyl retained per one seed was 0.5 mg. The seeds subjected to the smearing treatment were dried on a stainless-steel tray at a temperature of 20°C and a relative humidity of 50% to obtain a seed treated with the composition (14) of the present invention.

Comparative Seed Treatment Example 5

The smearing treatment was performed in the same procedures as in Seed Treatment Example 5 using the comparative composition (10) to obtain a seed treated with the comparative composition (10).

Seed Treatment Example 6

Using a seed treatment apparatus (trade name: HEGE 11, manufactured by WINTERSTEIGER), a treatment liquid prepared by adding 57.1 parts by weight of ion-exchanged water to 42.9 parts by weight of the composition (15) of the present invention was retained on 200 g of corn seeds by a smearing treatment. The seeds subjected to the smearing treatment were dried on a stainless-steel tray at a temperature of 20°C and a relative humidity of 50% for 2 days or more to obtain a seed treated with the composition (15) of the present invention.

Comparative Seed Treatment Example 6

The smearing treatment was performed in the same procedures as in Seed Treatment Example 6 using the comparative composition (11) to obtain a seed treated with the comparative composition (11).

Test Example 1: Evaluation of the peelability

Using the treated seeds obtained in the seed treatment examples 1 to 6 and the comparative seed treatment examples 1 to 6, the amount of dust separated from the seeds was examined to evaluate suppression of generation of dust from the seeds.
Under the following measurement conditions, the mass of dust sucked and captured by glass fiber filter paper for a predetermined time was measured as the amount of dust generated from the seed subjected to a smearing treatment.

<Measurement conditions>

A Heubach DUSTMETER (manufactured by Heubach Engineering GmbH (Germany)) was used as a measuring apparatus, and a measurement mode was Type I. The temperature and humidity of the atmosphere at the time of measurement were 25°C (± 2°C) and the relative humidity of 40 to 60%. The measurement was performed at normal pressure.
A specific measurement method is as follows.

1. The seeds (100.00 g) subjected to the smearing treatment were placed as a measurement sample into a rotatable drum of the DUSTMETER.
2. A mass ([Da] g) of the glass fiber filter paper having a diameter of 50 mm was measured to 0.0001 g accuracy. Glass Fibre Filters, GF-92 (manufactured by Tisch Scientific.) processed into a diameter of 50 mm was used as the glass fiber filter paper.

3. A coarse particle separator was fixed to the rotatable drum, and a filter case to which the glass fiber filter paper was mounted was fixed to the coarse particle separator.

4. The DUSTMETER was set to the following measurement conditions, and then measurement was carried out. Rotation speed of the drum: 30 R/min; suction air volume: 20 L/min; time (measurement time): 5 minutes.

5. After the 5 minutes elapsed, a mass ([Db] g) of the glass fiber filter paper was measured to 0.0001 g accuracy.

The amount of dust was calculated from the following Formula 1 based on [Da] and [Db]. According to the following Formula 1, a fine powder amount [g] per 100 kg of the seeds subjected to the smearing treatment is calculated with respect to the total mass of the seeds subjected to the smearing treatment.

[Math. 1]

$$\text{Dust amont [g] per 100 kg of seeds} = \{[Db] - \text{---} > [Da]\} / 100.00 \qquad \text{Formula 1}$$

The results are shown in Tables 1 to 4 below. Here, the evaluation value in the table indicates the mean of two replicates. However, the evaluation values of the composition (15) of the present invention and the comparative composition (11) indicate the results of one replicate.

[Table 1]

| | | Composition (1) of the present invention | Composition (2) of the present invention | Composition (3) of the present invention | Composition (4) of the present invention |
|---|---|---|---|---|---|
| Agrochemical active ingredient | Clothianidin | 47.8 | 47.8 | 47.8 | 47.8 |
| Binder | ULACOL (registered trademark) | 5.0 | 3.0 | 2.0 | 1.0 |
| | (natural rubber conversion) | (3.0) | (1.8) | (1.2) | (0.6) |
| Surfactant | Tersperse 2500 | 5.0 | 5.0 | 5.0 | 5.0 |
| | Envipol 871 | 1.0 | 1.0 | 1.0 | 1.0 |
| | Pluronic P103 | 1.0 | 1.0 | 1.0 | 1.0 |
| Antifreezing agent | Glycerin | 6.0 | 6.0 | 6.0 | 6.0 |
| Thickener | Veegum R | 0.3 | 0.3 | 0.3 | 0.3 |
| | Kelzan S plus | 0.05 | 0.05 | 0.05 | 0.05 |
| Defoamer | Xiameter AFE-0010 | 0.3 | 0.3 | 0.3 | 0.3 |
| Preservative | Proxel GXL | 0.25 | 0.25 | 0.25 | 0.25 |
| Coloring agent | Agrocer red 112 disp | 8.4 | 8.4 | 8.4 | 8.4 |
| Water | | 249 | 26.9 | 27.9 | 28.9 |
| Total | | 100 | 100 | 100 | 100 |
| Binder component/agrochemical active ingredient | | 6.3 | 3.8 | 2.5 | 1.3 |
| Dust amount (g) per 100 kg of seeds | | 1.0 | 0.7 | 1.2 | 2.7 |

[Table 2]

| | | Comparative composition (1) | Comparative composition (2) | Comparative composition (3) | Comparative composition (4) | Comparative composition (5) | Comparative composition (6) |
|---|---|---|---|---|---|---|---|
| Agrochemical active ingredient | Clothianidin | 47.8 | 47.8 | 47.8 | 47.8 | 47.8 | 47.8 |
| Binder | ULACOL (registered trademark) (natural rubber conversion) | - | 0.30 (0.18) | - | - | - | - |
| | EXCEVALRS 2117 | - | - | 0.6 | - | - | - |
| | Selvol 24 203 (binder component conversion) | - | - | - | 5.0 (1.2) | - | - |
| | Michem Lube 156PFP (binder component conversion) | - | - | - | - | 5.0 (1.2-1.3) | - |
| | Dur-0-set E-200 Emulsion (binder component conversion) | - | - | - | - | - | 5.0 (2.7-2.8) |
| Surfactant | Terseperse 2500 | 5.0 | 5.0 | 5.0 | 5.0 | 5.0 | 5.0 |
| | Envipol 871 | 1.0 | 1.0 | 1.0 | 1.0 | 1.0 | 1.0 |
| | Pluronic P103 | 1.0 | 1.0 | 1.0 | 1.0 | 1.0 | 1.0 |
| Antifreezing agent | Glycerin | 6.0 | 6.0 | 6.0 | 6.0 | 6.0 | 6.0 |
| Thickener | Veegum R | 0.3 | 0.3 | 0.3 | 0.3 | 0.3 | 0.3 |
| | Kelzan S plus | 0.05 | 0.05 | 0.05 | 0.05 | 0.05 | 0.05 |
| Defoamer | Xiameter AFE-0010 | 0.3 | 0.3 | 0.3 | 0.3 | 0.3 | 0.3 |
| Preservative | Proxel GXL | 0.25 | 0.25 | 0.25 | 0.25 | 0.25 | 0.25 |
| Coloring agent | Agrocer red 112 disp | 8.4 | 8.4 | 8.4 | 8.4 | 8.4 | 8.4 |
| Water | | 29.9 | 29.6 | 29.3 | 24.9 | 24.9 | 24.9 |
| Total | | 100 | 100 | 100 | 100 | 100 | 100 |
| Binder component/agrochemical active ingredient | | 0 | 0.4 | 1.3 | 2.5 | 2.6-2.7 | 5.7-5.9 |

EP 4 552 497 A1

| | | Comparative composition (1) | Comparative composition (2) | Comparative composition (3) | Comparative composition (4) | Comparative composition (5) | Comparative composition (6) |
|---|---|---|---|---|---|---|---|
| Dust amount (g) per 100 kg of seeds | | 4.6 | 4.2 | 5.2 | 5.0 | 4.3 | 4.3 |

[Table 3]

| | | Composition (5) of the present invention | Composition (6) of the present invention | Composition (7) of the present invention | Composition (8) of the present invention | Composition (9) of the present invention | Composition (10) of the present invention | Composition (11) of the present invention | Comparative composition (7) |
|---|---|---|---|---|---|---|---|---|---|
| Agrochemical active ingredient | Inpyrfluxam | 30.0 | 30.0 | 30.0 | 30.0 | 30.0 | 30.0 | 30.0 | 30.0 |
| Binder | ULACOL (registered trademark) | 20.0 | 15.0 | 100 | 4.0 | 2.0 | 1.0 | 0.5 | |
| | (natural rubber conversion) | (12.0) | (9.0) | (6.0) | (2.4) | (1.2) | (0.6) | (0.3) | |
| Surfactant | SOPROPHOR FLK | 3.7 | 3.7 | 3.7 | 3.7 | 3.7 | 3.7 | 3.7 | 3.7 |
| Antifreezing agent | Propylene glycol | 3.7 | 3.7 | 3.7 | 3.7 | 3.7 | 3.7 | 3.7 | 3.7 |
| Thickener | Veegum R | 0.3 | 0.3 | 0.3 | 0.3 | 0.3 | 0.3 | 0.3 | 0.3 |
| | Kelzan | 0.15 | 0.15 | 0.15 | 0.15 | 0.15 | 0.15 | 0.15 | 0.15 |
| Defoamer | Xiameter AFE-1530 | 0.15 | 0.15 | 0.15 | 0.15 | 0.15 | 0.15 | 0.15 | 0.15 |
| Preservative | Proxel GXL | 0.22 | 0.22 | 0.22 | 0.22 | 0.22 | 0.22 | 0.22 | 0.22 |
| Water | | 41.78 | 46.78 | 51.78 | 57.78 | 59.78 | 60.78 | 61.28 | 61.8 |
| Total | | 100 | 100 | 100 | 100 | 100 | 100 | 100 | 100 |
| Binder component/agrochemical active ingredient | | 40.0 | 30.0 | 20.0 | 8.0 | 4.0 | 2.0 | 1.0 | 0 |
| Dust amount (g) per 100 kg of seeds | | 0.3 | 1.0 | 0.9 | 0.5 | 0.7 | 0.8 | 1.2 | 3.6 |

EP 4 552 497 A1

17

[Table 4]

| | | Composition (12) of the present invention | Comparative composition (8) | Composition (13) of the present invention | Comparative composition (9) | Composition (14) of the present invention | Comparative composition (10) | Composition (15) of the present invention | Comparative composition (11) |
|---|---|---|---|---|---|---|---|---|---|
| Agrochemical active ingredient | Ethaboxam | 30.0 | 30.0 | - | - | - | - | 7.57 | 7.57 |
| | Mandestrobin | - | - | 30.0 | 30.0 | - | - | 5.65 | 5.65 |
| | Oxazosulfyl | - | - | - | - | 34.0 | 34.0 | - | - |
| | Clothianidin | - | - | - | - | - | - | 22.6 | 22.6 |
| | Inpyrfluxam | - | - | - | - | - | - | 3.73 | 3.73 |
| Binder | ULACOL (registered trademark) (natural rubber conversion) | 4.0 (2.4) | - | 4.0 (2.4) | - | 5.0 (3.0) | - | 5.7 (3.42) | - |
| Surfactant | SOPROPHOR FLK | 3.7 | 3.7 | 7.5 | 7.5 | 100 | 100 | - | - |
| | Reax910 | - | - | - | - | - | - | 8.48 | 8.48 |
| | Synperonic PE/F-127 | - | - | - | - | - | - | 0.34 | 0.34 |
| Antifreezing agent | Propylene glycol | 3.7 | 3.7 | - | - | 2.0 | 2.0 | - | - |
| | Glycerin | - | - | - | - | - | - | 5.65 | 5.65 |
| Thickener | Veegum R | 0.3 | 0.3 | 0.16 | 0.16 | 0.2 | 0.2 | 0.23 | 0.23 |
| | Kelzan | 0.15 | 0.15 | - | - | - | - | - | - |
| | Kelzan S | - | - | 0.08 | 0.08 | - | - | - | - |
| | Kelzan S plus | - | - | - | - | 0.10 | 0.10 | 0.11 | 0.11 |
| Defoamer | Xiameter AFE-1530 | 0.15 | 0.15 | - | - | - | - | - | - |
| | KS-538 | - | - | 0.15 | 0.15 | 0.2 | 0.2 | - | - |
| | Xiameter ACP-1500 | - | - | - | - | - | - | 0.23 | 0.23 |

EP 4 552 497 A1

(continued)

| | | Composition (12) of the present invention | Comparative composition (8) | Composition (13) of the present invention | Comparative composition (9) | Composition (14) of the present invention | Comparative composition (10) | Composition (15) of the present invention | Comparative composition (11) |
|---|---|---|---|---|---|---|---|---|---|
| Preservative | Proxel GXL | 0.22 | 0.22 | 0.15 | 0.15 | 0.20 | 0.20 | 0.23 | 0.23 |
| Coloring agent | Agrocer red 112 disp | - | - | - | - | - | - | 8.47 | 8.47 |
| | Water | 57.78 | 61.78 | 57.96 | 61.96 | 48.3 | 53.30 | 31.01 | 36.71 |
| | Total | 100 | 100 | 100 | 100 | 100 | 100 | 100 | 100 |
| Binder component/agrochemical active ingredient | | 8.0 | 0 | 8.0 | 0 | 8.8 | 0 | 8.6 | 0 |
| Dust amount (g) per 100 kg of seeds | | 0.3 | 1.7 | 0.3 | 2.3 | 0.1 | 0.7 | 0.4 | 1.8 |

Production Example 16

37.0 parts by weight of inpyrfluxam, 4.63 parts by weight of a mixture of 40% by weight of polyoxyethylene tristyryl phenyl ether phosphoric acid ester potassium salt and 60% by weight of propylene glycol (SOPROPHOR FLK, manufactured by Solvay Nicca, Ltd.), 0.19 parts by weight of a silicone-based defoamer (Xiameter AFE-1530 Antifoam Emulsion, manufactured by Dow Corning Toray Co., Ltd.), and 35.14 parts by weight of ion-exchanged water were mixed to obtain a mixture (A).

The mixture (A) was wet-pulverized using a horizontal bead mill (DYNO-MILL KDL, manufactured by WILLY A. BACHOFEN AG Maschinenfabrik) to obtain a suspension (A). Separately, 0.19 parts by weight of xanthan gum (Kelzan, manufactured by CP Kelco), 0.37 parts by weight of magnesium aluminum silicate (Veegum R, manufactured by Vanderbilt Chemicals, LLC), 4.63 parts by weight of propylene glycol, and 0.28 parts by weight of a preservative (Proxel GXL, manufactured by Lonza, containing 1,2-benzisothiazoline-3-one as an active ingredient) were added to 17.57 parts by weight of ion-exchanged water, followed by continuring to stir for 2 hours to obtain a mixture (A-2). The mixture (A-2) was added to the suspension (A) obtained previously and was mixed to obtain a mixture (A-3).

1.69 parts by weight of the mixture (A-3), 0.17 parts by weight of a red pigment aqueous dispersion (Agrocer red 112 disp, manufactured by CLARIANT), 0.08 parts by weight of an aqueous dispersion containing 60% by weight of unmodified natural rubber (ULACOL (registered trademark), manufactured by Regitex Corporation), and 1.54 parts by weight of ion-exchanged water were added to obtain the aqueous suspension agrochemical composition of the present invention (hereinafter, also referred to as the composition (16) of the present invention).

Production Example 17

The mixture (A-3) was obtained by the same procedures as in Production Example 16. 1.69 parts by weight of the mixture (A-3), 0.17 parts by weight of a red pigment aqueous dispersion (Agrocer red 112 disp, manufactured by CLARIANT), 0.17 parts by weight of an aqueous dispersion containing 60% by weight of unmodified natural rubber (ULACOL (registered trademark), manufactured by Regitex Corporation), and 1.45 parts by weight of ion-exchanged water were added to obtain the aqueous suspension agrochemical composition of the present invention (hereinafter, also referred to as the composition (17) of the present invention).

Production Example 18

34.0 parts by weight of oxazosulfyl, 10.0 parts by weight of a mixture of 40% by weight of polyoxyethylene tristyryl phenyl ether phosphoric acid ester potassium salt and 60% by weight of propylene glycol (SOPROPHOR FLK, manufactured by Solvay Nicca, Ltd.), 0.20 parts by weight of a silicone-based defoamer (KS-538, manufactured by Shin-Etsu Chemical Co., Ltd.), and 43.8 parts by weight of ion-exchanged water were mixed to obtain a mixture (B).

The mixture (B) was wet-pulverized using a horizontal bead mill (DYNO-MILL KDL, manufactured by WILLY A. BACHOFEN AG Maschinenfabrik) to obtain a suspension (B). Separately, 0.10 parts by weight of xanthan gum (Kelzan S PLUS, manufactured by CP Kelco), 0.20 parts by weight of magnesium aluminum silicate (Veegum R, manufactured by Vanderbilt Chemicals, LLC), 2.0 parts by weight of propylene glycol, and 0.20 parts by weight of a preservative (Proxel GXL(S), manufactured by Lonza, containing 1,2-benzisothiazoline-3-one as an active ingredient) were added to 9.5 parts by weight of ion-exchanged water, followed by continuring to stir for 2 hours to obtain a mixture (B-2). The mixture (B-2) was added to the suspension (B) obtained previously and was mixed to obtain a mixture (B-3).

1.83 parts by weight of the mixture (B-3), 0.19 parts by weight of a red pigment aqueous dispersion (Agrocer red 112 disp, manufactured by CLARIANT), 0.09 parts by weight of an aqueous dispersion containing 60% by weight of unmodified natural rubber (ULACOL (registered trademark), manufactured by Regitex Corporation), and 1.37 parts by weight of ion-exchanged water were added to obtain the aqueous suspension agrochemical composition of the present invention (hereinafter, also referred to as the composition (18) of the present invention).

Production Example 19

The mixture (B-3) was obtained by the same procedures as in Production Example 18. 1.83 g of the mixture (B-3), 0.19 parts by weight of a red pigment aqueous dispersion (Agrocer red 112 disp, manufactured by CLARIANT), 0.19 parts by weight of an aqueous dispersion containing 60% by weight of unmodified natural rubber (ULACOL (registered trademark), manufactured by Regitex Corporation), and 1.27 parts by weight of ion-exchanged water were added to obtain the aqueous suspension agrochemical composition of the present invention (hereinafter, also referred to as the composition (19) of the present invention).

Production Example 20

18.0 parts by weight of oxazosulfyl, 10.0 parts by weight of a mixture of 40% by weight of polyoxyethylene tristyryl phenyl ether phosphoric acid ester potassium salt and 60% by weight of propylene glycol (SOPROPHOR FLK, manufactured by Solvay Nicca, Ltd.), 0.20 parts by weight of a silicone-based defoamer (KS-538, manufactured by Shin-Etsu Chemical Co., Ltd.), and 25.7 parts by weight of ion-exchanged water were mixed to obtain a mixture (C).
The mixture (C) was wet-pulverized using a horizontal bead mill (DYNO-MILL KDL, manufactured by WILLY A. BACHOFEN AG Maschinenfabrik) to obtain a suspension (C). Separately, 0.10 parts by weight of xanthan gum (Kelzan S PLUS, manufactured by CP Kelco), 0.20 parts by weight of magnesium aluminum silicate (Veegum R, manufactured by Vanderbilt Chemicals, LLC), and 0.20 parts by weight of a preservative (Proxel GXL(S), manufactured by Lonza, containing 1,2-benzisothiazoline-3-one as an active ingredient) were added to 8.1 parts by weight of ion-exchanged water, followed by continuring to stir for 2 hours to obtain a mixture (C-2). The mixture (C-2) was added to the suspension (C) obtained previously and was mixed to obtain a mixture (C-3). Followed by adding 5.0 parts by weight of a red pigment aqueous dispersion (Agrocer red 112 disp, manufactured by CLARIANT), 5.0 parts by weight of an aqueous dispersion containing 60% by weight of unmodified natural rubber (ULACOL (registered trademark), manufactured by Regitex Corporation), and 27.5 parts by weight of ion-exchanged water thereto to obtain the aqueous suspension agrochemical composition of the present invention (hereinafter, also referred to as the composition (20) of the present invention).

Production Example 21

18.0 parts by weight of oxazosulfyl, 10.0 parts by weight of a mixture of 40% by weight of polyoxyethylene tristyryl phenyl ether phosphoric acid ester potassium salt and 60% by weight of propylene glycol (SOPROPHOR FLK, manufactured by Solvay Nicca, Ltd.), 0.20 parts by weight of a silicone-based defoamer (KS-538, manufactured by Shin-Etsu Chemical Co., Ltd.), and 25.7 parts by weight of ion-exchanged water were mixed to obtain a mixture (D).
The mixture (D) was wet-pulverized using a horizontal bead mill (DYNO-MILL KDL, manufactured by WILLY A. BACHOFEN AG Maschinenfabrik) to obtain a suspension (D). Separately, 0.10 parts by weight of xanthan gum (Kelzan S PLUS, manufactured by CP Kelco), 0.20 parts by weight of magnesium aluminum silicate (Veegum R, manufactured by Vanderbilt Chemicals, LLC), and 0.20 parts by weight of a preservative (Proxel GXL(S), manufactured by Lonza, containing 1,2-benzisothiazoline-3-one as an active ingredient) were added to 8.1 parts by weight of ion-exchanged water, followed by continuring to stir for 2 hours to obtain a mixture (D-2). The mixture (D-2) was added to the suspension (D) obtained previously and was mixed to obtain a mixture (D-3). Followed by adding 5.0 parts by weight of a red pigment aqueous dispersion (Agrocer red 112 disp, manufactured by CLARIANT), 10.0 parts by weight of an aqueous dispersion containing 60% by weight of unmodified natural rubber (ULACOL (registered trademark), manufactured by Regitex Corporation), and 22.5 parts by weight of ion-exchanged water thereto to obtain the aqueous suspension agrochemical composition of the present invention (hereinafter, also referred to as the composition (21) of the present invention).

Production Example 22

40.0 parts by weight of oxazosulfyl, 10.0 parts by weight of a mixture of 40% by weight of polyoxyethylene tristyryl phenyl ether phosphoric acid ester potassium salt and 60% by weight of propylene glycol (SOPROPHOR FLK, manufactured by Solvay Nicca, Ltd.), 0.20 parts by weight of a silicone-based defoamer (Xiameter ACP-1500 Antifoam compound, manufactured by Dow Corning Toray Co., Ltd.), and 25.7 parts by weight of ion-exchanged water were mixed to obtain a mixture (E).
The mixture (E) was wet-pulverized using a horizontal bead mill (DYNO-MILL KDL, manufactured by WILLY A. BACHOFEN AG Maschinenfabrik) to obtain a suspension (E).
Separately, 0.04 parts by weight of xanthan gum (Kelzan S PLUS, manufactured by CP Kelco), 0.08 parts by weight of magnesium aluminum silicate (Veegum R, manufactured by Vanderbilt Chemicals, LLC), and 0.20 parts by weight of a preservative (Proxel GXL(S), manufactured by Lonza, containing 1,2-benzisothiazoline-3-one as an active ingredient) were added to 4.4 parts by weight of ion-exchanged water, followed by continuring to stir for 2 hours to obtain a mixture (E-2). The mixture (E-2) was added to the suspension (E) obtained previously and was mixed to obtain a mixture (E-3). Followed by adding 5.0 parts by weight of a red pigment aqueous dispersion (Agrocer red 112 disp, manufactured by CLARIANT), 10.0 parts by weight of an aqueous dispersion containing 60% by weight of unmodified natural rubber (ULACOL (registered trademark), manufactured by Regitex Corporation), and 4.38 parts by weight of ion-exchanged water thereto to obtain the aqueous suspension agrochemical composition of the present invention (hereinafter, also referred to as the composition (22) of the present invention).

Comparative Production Example 12

The mixture (A-3) was obtained by the same procedures as in Production Example 16. 1.69 g of the mixture (A-3), 0.17 parts by weight of a red pigment aqueous dispersion (Agrocer red 112 disp, manufactured by CLARIANT), and 1.62 parts by weight of water were added to obtain an aqueous suspension agrochemical composition for comparison (hereinafter, also referred to as comparative composition (12)).

Comparative Production Example 13

The mixture (B-3) was obtained by the same procedures as in Production Example 18. 1.83 g of the mixture (B-3), 0.19 parts by weight of a red pigment aqueous dispersion (Agrocer red 112 disp, manufactured by CLARIANT), and 1.46 parts by weight of ion-exchanged water were added to obtain an aqueous suspension agrochemical composition for comparison (hereinafter, also referred to as comparative composition (13)).

Seed Treatment Example 7

100 g of dried rice seeds (dry rice seeds) was put in a vinyl bag, 3.48 g of the composition (16) of the present invention was added thereto, and the mixture was sufficiently mixed. After mixing, the mixture was air-dried until moisture was sufficiently removed to obtain a seed treated with the composition (16) of the present invention.

Seed Treatment Example 8

100 g of dried rice seeds (dry rice seeds) was put in a vinyl bag, 3.48 g of the composition (17) of the present invention was added thereto, and the mixture was sufficiently mixed. After mixing, the mixture was air-dried until moisture was sufficiently removed to obtain a seed treated with the composition (17) of the present invention.

Comparative Seed Treatment Example 7

100 g of dried rice seeds (dry rice seeds) was put in a vinyl bag, 3.48 g of the comparative composition (12) was added thereto, and the mixture was sufficiently mixed. After mixing, the mixture was air-dried until moisture was sufficiently removed to obtain a seed treated with the comparative composition (12).

Seed Treatment Example 9

100 g of dried rice seeds (dry rice seeds) was put in a vinyl bag, 3.48 g of the composition (18) of the present invention was added thereto, and the mixture was sufficiently mixed. After mixing, the mixture was air-dried until moisture was sufficiently removed to obtain a seed treated with the composition (18) of the present invention.

Seed Treatment Example 10

100 g of dried rice seeds (dry rice seeds) was put in a vinyl bag, 3.48 g of the composition (19) of the present invention was added thereto, and the mixture was sufficiently mixed. After mixing, the mixture was air-dried until moisture was sufficiently removed to obtain a seed treated with the composition (19) of the present invention.

Seed Treatment Example 11

100 g of dried rice seeds (dry rice seeds) was put in a vinyl bag, 3.48 g of the composition (20) of the present invention was added thereto, and the mixture was sufficiently mixed. After mixing, the mixture was air-dried until moisture was sufficiently removed to obtain a seed treated with the composition (20) of the present invention.

Seed Treatment Example 12

100 g of dried rice seeds (dry rice seeds) was put in a vinyl bag, 3.48 g of the composition (21) of the present invention was added thereto, and the mixture was sufficiently mixed. After mixing, the mixture was air-dried until moisture was sufficiently removed to obtain a seed treated with the composition (21) of the present invention.

Seed Treatment Example 13

1.35 parts by weight of ion-exchanged water was added to 1.67 parts by weight of the composition (22) of the present invention and was mixed to prepare a seed treatment liquid. 100 g of dried rice seeds (dry rice seeds) was put in a vinyl bag, the whole amount of the prepared chemical liquid was added thereto, and the mixture was sufficiently mixed. After mixing, the mixture was air-dried until moisture was sufficiently removed to obtain a seed treated with the composition (22) of the present invention.

Comparative Seed Treatment Example 8

100 g of dried rice seeds (dry rice seeds) was put in a vinyl bag, 3.48 g of the comparative composition (13) was added thereto, and the mixture was sufficiently mixed. After mixing, the mixture was air-dried until moisture was sufficiently removed to obtain a seed treated with the comparative composition (13).

Test Example 2: Evaluation of water resistance when agrochemical active ingredient is inpyrfluxam

Inpyrfluxam attached to the seeds treated with inpyrfluxam, which were prepared in the above Seed Treatment Examples 7 to 8 and Comparative Seed Treatment Example 7, was quantified by HPLC, and an attachment amount X1 in 75 seeds was calculated. 75 seeds treated with inpyrfluxam were placed in a 100 mL screw tube, 8 mL of ion-exchanged water was added, and the mixture was stored in a thermostat at 15°C for 24 hours. After storage, the ion-exchanged water was removed. The addition of ion-exchanged water, the storage in a thermostat, and the removal of the ion-exchanged water were performed four times in total, then inpyrfluxam attached to the seeds treated with inpyrfluxam was quantified by HPLC, and an attachment amount X2 was calculated. From the calculated attachment amount, a residual rate was calculated by Formula 2 shown below.

[Math. 2]

$$\text{Residual rate [\%]} = [X2] \times 100/[X1] \quad \text{Formula 2}$$

The results are shown in Table 5 below. Here, values of X1 and X2 in the table indicate the mean of three replicates.

[Table 5]

|  | Comparative composition (12) | Composition (16) of the present invention | Composition (17) of the present invention |
|---|---|---|---|
| Binder component/agrochemical active ingredient | 0 | 7.7 | 16.3 |
| Attachment amount X1 (mg) | 11.42 | 11.45 | 11.47 |
| Attachment amount X2 (mg) | 7.57 | 9.89 | 10.42 |
| Residual rate (mg) | 66.3 | 86.4 | 90.8 |

Test Example 3: Evaluation of water resistance when agrochemical active ingredient is oxazosulfyl

Oxazosulfyl attached to the seeds treated with oxazosulfyl, which were prepared in the above Seed Treatment Examples 9 to 13 and Comparative Seed Treatment Example 8, was quantified by HPLC, and an attachment amount Y1 in 75 seeds was calculated. 75 seeds treated with oxazosulfyl were placed in a 100 mL screw tube, 8 mL of ion-exchanged water was added, and the mixture was stored in a thermostat at 15°C for 24 hours. After storage, the ion-exchanged water was removed. The addition of ion-exchanged water, the storage in a thermostat, and the removal of the ion-exchanged water were performed four times in total, then oxazosulfyl attached to the seeds treated with oxazosulfyl was quantified by HPLC, and an attachment amount Y2 was calculated. From the calculated attachment amount, a residual rate was calculated by Formula 2 shown below.
[Math. 3]

$$\text{Residual rate [\%]} = [Y2] \times 100/[Y1] \quad \text{Formula 3}$$

The results are shown in Table 6 below. Here, values of Y1 and Y2 in the table indicate the mean of three replicates.

[Table 6]

| | Comparative composition (13) | Composition (18) of the present invention | Composition (19) of the present invention | Composition (20) of the present invention | Composition (21) of the present invention | Composition (22) of the present invention |
|---|---|---|---|---|---|---|
| Binder component/agrochemical active ingredient | 0 | 8.7 | 18.3 | 16.7 | 33.3 | 15.0 |
| Attachment amount Y1 (mg) | 11.62 | 11.11 | 11.35 | 11.10 | 10.63 | 12.48 |
| Attachment amount Y2 (mg) | 9.61 | 10.1 | 10.61 | 10.09 | 10.31 | 12.03 |
| Residual rate (mg) | 82.7 | 90.9 | 93.5 | 90.9 | 97.0 | 96.4 |

INDUSTRIAL APPLICABILITY

According to the present invention, it is possible to provide an environmentally friendly aqueous agrochemical composition for seed treatment containing a natural rubber which is a natural material. Since the aqueous agrochemical composition for seed treatment of the present invention is suppressed from peeling off from the seed, the handleability is improved. In addition, it is possible to provide an aqueous agrochemical composition that can significantly suppress the outflow of the aqueous agrochemical composition from a treated seed due to water such as rainfall or watering, and has an excellent agrochemical activity effect.

**Claims**

1.  An aqueous agrochemical composition comprising:

    an agrochemical active ingredient;
    a surfactant;
    a natural rubber; and
    water,
    wherein a weight ratio of the agrochemical active ingredient to the natural rubber is 100 : 1 to 1 : 2.

2.  The aqueous agrochemical composition according to claim 1, wherein the agrochemical active ingredient is an agrochemical active ingredient which is solid at 25°C.

3.  The aqueous agrochemical composition according to claim 1 or 2, wherein the agrochemical active ingredient is an agrochemical active ingredient having a melting point of 80°C or higher.

4.  The aqueous agrochemical composition according to any one of claims 1 to 3, wherein the agrochemical active ingredient is at least one selected from the group consisting of clothianidin, inpyrfluxam, oxazosulfyl, mandestrobin, and ethaboxam.

5.  The aqueous agrochemical composition according to any one of claims 1 to 4, wherein the weight ratio of the agrochemical active ingredient to the natural rubber is 100 : 1 to 5 : 2.

6.  The aqueous agrochemical composition according to any one of claims 1 to 5, comprising 10 to 60% by weight of the agrochemical active ingredient and 0.3 to 30% by weight of the natural rubber, based on a weight of the aqueous agrochemical composition.

7.  The aqueous agrochemical composition according to any one of claims 1 to 6, wherein the aqueous agrochemical composition is an aqueous suspension agrochemical composition.

8.  The aqueous agrochemical composition according to any one of claims 1 to 7, wherein the aqueous agrochemical composition is for seed treatment.

9.  A method for controlling pests comprising applying the aqueous agrochemical composition according to any one of claims 1 to 8 to a seed of a plant.

10. A method of producing the aqueous agrochemical composition according to any one of claims 1 to 8, comprising a step of adding a natural rubber to a dispersion containing an agrochemical active ingredient, a surfactant, and water, in which the agrochemical active ingredient is emulsified or suspended.

11. A seed obtained by applying the aqueous agrochemical composition according to any one of claims 1 to 8, on which an agrochemical active ingredient, a surfactant, and a natural rubber are retained.

12. A method of producing a seed on which an agrochemical active ingredient, a surfactant, and natural rubber are retained, comprising a step of applying the aqueous agrochemical composition according to any one of claims 1 to 8 to a seed.

13. Use of a natural rubber for production of the aqueous agrochemical composition according to any one of claims 1 to 8, for pest control.

**14.** Use of the aqueous suspension agrochemical composition according to any one of claims 1 to 8, for pest control.

## INTERNATIONAL SEARCH REPORT

International application No.

**PCT/JP2023/022386**

### A. CLASSIFICATION OF SUBJECT MATTER

*A01N 37/38*(2006.01)i; *A01N 51/00*(2006.01)i; *A01P 7/04*(2006.01)i; *A01P 3/00*(2006.01)i; *A01N 43/56*(2006.01)i; *A01N 43/78*(2006.01)i; *A01N 43/80*(2006.01)i; *A01N 25/10*(2006.01)i; *A01N 47/02*(2006.01)i; *A01C 1/08*(2006.01)i

FI:   A01N25/10; A01N51/00; A01N43/80 102; A01N43/56 C; A01N43/78 D; A01N37/38; A01N47/02; A01P7/04; A01P3/00; A01C1/08

According to International Patent Classification (IPC) or to both national classification and IPC

### B. FIELDS SEARCHED

Minimum documentation searched (classification system followed by classification symbols)

A01N37/38; A01N51/00; A01P7/04; A01P3/00; A01N43/56; A01N43/78; A01N43/80; A01N25/10; A01N47/02; A01C1/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); CAplus/MEDLINE/EMBASE/BIOSIS/WPIX (STN)

### C. DOCUMENTS CONSIDERED TO BE RELEVANT

| Category* | Citation of document, with indication, where appropriate, of the relevant passages | Relevant to claim No. |
|---|---|---|
| X | JP 11-035408 A (TAKEDA CHEMICAL INDUSTRIES LTD) 09 February 1999 (1999-02-09) claims 1-3, 14, paragraphs [0007]-[0014], [0016]-[0017], [0019], examples 1-5 | 1-3, 5-6, 10, 13-14 |
| Y | | 4-14 |
| Y | JP 2019-019124 A (NIPPON KAYAKU KK) 07 February 2019 (2019-02-07) paragraph [0100] | 4-14 |
| Y | JP 2012-184209 A (SUMITOMO CHEMICAL CO LTD) 27 September 2012 (2012-09-27) claims 1, 10-11, paragraphs [0007], [0028] | 7-14 |
| A | JP 2008-527065 A (SYNGENTA LIMITED) 24 July 2008 (2008-07-24) | 1-14 |
| A | JP 03-501845 A (DOW CHEMICAL COMPANY LIMITED) 25 April 1991 (1991-04-25) | 1-14 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 August 2023** | **29 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

International application No.

**PCT/JP2023/022386**

| Patent document cited in search report | | | Publication date (day/month/year) | Patent family member(s) | | | Publication date (day/month/year) |
|---|---|---|---|---|---|---|---|
| JP | 11-035408 | A | 09 February 1999 | (Family: none) | | | |
| JP | 2019-019124 | A | 07 February 2019 | (Family: none) | | | |
| JP | 2012-184209 | A | 27 September 2012 | US | 2014/0030301 | A1 | |
| | | | | claims 1, 10-11, paragraphs [0008]-[0010], [0045]-[0046] | | | |
| | | | | WO | 2012/121413 | A1 | |
| | | | | EP | 2683237 | A1 | |
| JP | 2008-527065 | A | 24 July 2008 | US | 2009/0208546 | A1 | |
| | | | | WO | 2006/070183 | A1 | |
| | | | | EP | 1833297 | A1 | |
| JP | 03-501845 | A | 25 April 1991 | JP | 03-501846 | A | |
| | | | | US | 5321049 | A | |
| | | | | WO | 1989/003175 | A1 | |
| | | | | WO | 1989/003176 | A1 | |
| | | | | EP | 381691 | A1 | |
| | | | | EP | 393069 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012184209 A